(19) **Europäisches Patentamt / European Patent Office / Office européen des brevets**

(11) **EP 4 560 377 A1**

(12) **EUROPEAN PATENT APPLICATION**

(43) Date of publication:
**28.05.2025 Bulletin 2025/22**

(21) Application number: **23211702.8**

(22) Date of filing: **23.11.2023**

(51) International Patent Classification (IPC):
**G02B 21/36** *(2006.01)* **G06T 5/80** *(2024.01)*
**G06T 3/608** *(2024.01)*

(52) Cooperative Patent Classification (CPC):
**G02B 21/367; G02B 21/0072; G02B 21/008;**
G02B 21/0076

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Leica Microsystems CMS GmbH 35578 Wetzlar (DE)**

(72) Inventor: **Schumann, Christian 35578 Wetzlar (DE)**

(74) Representative: **Schaumburg und Partner Patentanwälte mbB Mauerkircherstraße 31 81679 München (DE)**

(54) **METHOD FOR GENERATING A VOLUMETRIC IMAGE OF A SAMPLE AND LIGHT SHEET MICROSCOPE**

(57) A method for generating a volumetric image of a sample (118) using a light sheet microscope (100, 300) comprises: Illuminating a plurality of layers (202) of the sample (118) arranged along a scanning direction (C) using the light sheet, wherein a light propagation direction (A) of the light sheet is tilted by a tilt angle ($\alpha$) less than 90° with respect to the scanning direction (C). Generating layer images from the illuminated layers (202). Generating raw image data corresponding to an image stack comprising the layer images, the image stack being sheared by the tilt angle ($\alpha$) or by 90° minus the tilt angle ($\alpha$) and being distorted by the optical properties of the optical system (104). The method further comprises generating processed image data from the raw image data by defining an image space comprising voxel and corresponding to the imaged volume (200, 400) of the sample (118), and assigning at least one value to each voxel of the image space based on at least one value of at least one voxel of the image stack, wherein the voxel of the image space and the at least one voxel of the image stack are related by a non-linear transformation. Alternatively, the method comprises generating processed image data from the raw image data by applying the inverse of the non-linear transformation to the raw image data.

**FIG. 1**

**Description**

Technical field

The invention relates to a method for generating a volumetric image of a sample using a light sheet microscope. The invention further relates to a light sheet microscope.

Background

Oblique plane microscopy (OPM) is a variant of light sheet microscopy that differs in the orientation of the illuminating light sheet. Conventional light sheet microscopes comprise two separate objectives directed at a sample, one for illumination and the other for detection. An illumination objective directs the light sheet into the sample, with the light sheet parallel to the optical axis of the illumination objective. Fluorescent light emitted by the sample is then imaged onto a detector by a detection objective, whose optical axis is perpendicular to the optical axis of the illumination objective. For applications where the sample cannot be imaged by such a conventional light sheet microscope due to lack of space, an optical arrangement has been proposed that makes do with a single objective facing the sample. In such a microscope, the light sheet is focused into the sample in such a way that it is oblique to the optical axis of the objective. Because of this oblique position, such an optical arrangement is also called an oblique plane microscope.

In order to generate a volumetric image of the sample, several successive layers of the sample are imaged and combined to form an image stack. However, the optical arrangement of oblique plane microscopes leads to a shearing of the image stack and thus to a sheared volume image of the illuminated sample area. In order to correctly display the volumetric image captured by an oblique plane microscope, it is necessary to transform the captured image data. This transformation is commonly known as deskewing. Current methods and systems for oblique plane microscopy use a simple linear shear transformation to deskew the image data, for example H. Sparks et al., Biomed Opt. Expr. 11 (2020) 7204, and J. Lamb et al. Biomed Opt. Expr. 14 (2023) 834. For example, the linear transformation may look like this:

$$\vec{x}' = \begin{bmatrix} 1 & 0 & 0 \\ 0 & 1 & \tan \alpha \\ 0 & 0 & 1 \end{bmatrix} \cdot \vec{x}.$$

Where $\alpha$ is the tilt angle, $\vec{x}$ is the position in the sample and $\vec{x}'$ the position in the coordinate system of the recorded data. For every $\vec{x}$ in the volumetric image to be reconstructed, $\vec{x}'$ can be calculated, and the recorded data can be looked up, possibly with the help of an appropriate interpolation method when $\vec{x}'$ does not coincide with a sample point in the recorded data. However, residual geometric distortions remain in the volumetric images reconstructed with the aid of these simple linear transformations.

Summary

It is therefore an object to provide a method for generating a volumetric image of a sample using a light sheet microscope, and a light sheet microscope which improve upon current methods and light sheet microscopes.

The aforementioned object is achieved by the subject-matter of the independent claims. Advantageous embodiments are defined in the dependent claims and the following description.

The proposed method for generating a volumetric image of a sample using a light sheet microscope comprises the following steps: Generating a light sheet, said light sheet extending along a light propagation direction and an extension direction perpendicular thereto. Illuminating a plurality of layers of the sample arranged successively along a scanning direction using the light sheet such that a volume of the sample is scanned, the volume being spanned by the light propagation direction, the extension direction and the scanning direction, wherein the light propagation direction is tilted by a tilt angle less than 90° with respect to the scanning direction. Generating one layer image for each of the illuminated layers using an optical system. Generating raw image data corresponding to an image stack comprising the layer images, the image stack comprising voxel and being sheared by the tilt angle or by 90° minus the tilt angle and being distorted by the optical properties of the optical system compared to the imaged volume of the sample. The method further comprises generating processed image data from the raw image data by defining an image space comprising voxel and corresponding to the imaged volume of the sample, and assigning at least one value to each voxel of the image space based on at least one value of at least one voxel of the image stack, wherein the voxel of the image space and the at least one voxel of the image stack are related by a non-linear transformation. Alternatively or additionally, the method comprises generating processed image data from the raw image data by applying the inverse of the non-linear transformation to the raw image data. In any embodiment the non-linear transformation parameterizes the shear of the image stack due to the tilt of the light propagation direction with respect to the scanning direction and the image errors induced by the optical system, and the processed image data corresponds to the volumetric image of the sample.

The imaged volume may in particular have a shape similar to that of a parallelepiped spanned by the light propagation direction, the extension direction and the scanning direction. However, the extension direction may be varied, for example using a rotating cylinder lens to generate the light sheet, so that different shapes are possible. In any case, the imaged volume is sheared compared to a cuboid. Depending on the exact optical configuration of the light sheet microscope used, the cuboid is sheared in the scanning direction by an angle equal to the tilt angle or 90° minus the tilt angle. In addition, the imaged volume is deformed by the optical system during imaging. It was recognized that these residual geometric distortions, such as distortion and field curvature, cannot be corrected by the simple linear transformation used in current oblique plane microscopy methods. It was further recognized that a faithful representation of the imaged volume requires a deskewing operation beyond a simple linear transformation. Therefore, the proposed method uses the non-linear transformation as a basis for the deskewing operation. The non-linear transformation parameterizes both the shear of the image stack due to the tilt of the image stack as well as the residual geometric distortions induced by the optical system, effectively combining the geometric distortions as well as the tilt into a generalized three-dimensional distortion. Thus, the proposed method provides a much more accurate representation of the imaged volume and is a significant improvement over current methods.

In the first embodiment, the volumetric image is reconstructed in the image space, for example voxel by voxel. Each voxel in the image space is assigned at least one value. Multiple values per voxel are possible. For example, each voxel can be assigned three values, each value corresponding to the red, green and blue components of the detection light. Each voxel can also be assigned multiple values, each value corresponding to a different fluorescence channel representing a different wavelength band of the detection light. The value or values of each voxel in image based are assigned based on the value or values associated with one or more corresponding voxel in the image stack. The voxel in the image space and the voxel in the image stack are related to each other by way of the non-linear transformation. In a sense, the non-linear transformation corresponds to a coordinate transformation from the image space to the image stack. While the image space is defined such that it faithfully represents the imaged volume, the image stack is essentially a cuboid, with the non-linear transformation relating the two geometric objects. In most cases, the point in the image stack corresponding to the voxel in the image space will be located between two or more voxel of the image stack. In this case, a suitable interpolation scheme may be applied to interpolate between the values of the voxel in the image stack. For example, a simple linear interpolation scheme may be used. However, a higher order interpolation scheme may also be used. Alternatively, a nearest-neighbor interpolation scheme may be used in which the value or values of the voxel closest to the point in the image stack corresponding to the voxel in the image space is assigned to the voxel in the image space.

In the second embodiment, the cuboid shaped image stack is transformed into the volumetric image using the inverse of the non-linear transformation. Thus, the inverse of the non-linear transformation corresponds to a coordinate transformation from the image stack to the volumetric image. The transformation can be done per voxel, for example, by transforming each voxel in the image stack into one or more voxel of the volumetric image. In particular, this can be done as each voxel is acquired, thereby providing a constantly updating live image of the imaged volume. Alternatively, the image stack may be transformed as a whole or in part. In this embodiment, the value or values of each voxel in the image stack are assigned to one or more voxel of the volumetric image. As in the first embodiment, due to the fact that both the image stack and the volumetric image are comprised of voxel, the point in the volumetric image corresponding to the voxel in the image stack will in most cases be located between two or more voxel of the volumetric image. In these cases, one of the interpolation schemes mentioned above may be used to interpolate between values.

In an embodiment, the non-linear transformation and/or its inverse are determined based at least on optical design data of the optical system. The optical design data is a good approximation of the actual optical properties of the optical system. Thus, the nonlinear transformation and/or its inverse can be constructed with good accuracy based on the optical design data. In particular, the nonlinear transformation and/or its inverse constructed based on the optical design data can be further refined using measured optical properties of the light sheet microscope, further increasing the accuracy.

In another embodiment, the non-linear transformation and/or its inverse are determined as a series expansion, preferably a series expansion using orthogonal functions as basis functions. For example, the non-linear transformation $\vec{f}$ ($\vec{x}$) which relates points $\vec{x}$ in the sample, and thus in the volumetric image, to points $\vec{x}'$ in the image stack may be written as

$$\vec{x}' = \vec{f}(\vec{x}) \approx \sum_{n=0}^{N-1} \vec{c}_n \cdot F_n(\vec{x})$$

where $F_n(\vec{x})$ are the basis functions, and $\vec{c}_n$ are the expansion coefficients. The expansion coefficients may for example be determined from optical design data of the optical system, or from a calibration step. A limited number of expansion coefficients is sufficient to represent the function with sufficient accuracy with respect to the sampling resolution of the light sheet microscope. According to Taylor's theorem, polynomials are a reasonable set of basis functions. But other basis functions are also possible. Ideally, the basis functions are orthogonal over the domain of the imaging system (possibly after some rescaling of the coordinate axes), i.e. the maximum extent of the imaged volume in the sample. Using orthogonal functions in particular leads to a minimization of approximation error, ensuring an accurate representation of the non-linear transformation.

In another embodiment, the basis functions of the series expansion are the dyadic product of three orthogonal functions, each of the three orthogonal functions corresponding to one of three coordinate directions. Decomposing the basis functions in this way has the advantage of breaking the computation required to determine values of the nonlinear transformation and/or its inverse into more, but simpler, computational steps. In an example, the basis functions may be the dyadic product of three Chebyshev polynomials of the first kind $T_m(x_i)$, each polynomial corresponding to a different coordinate direction $i$. Given a mapping from the single index $n$ to a multi-index $(q,r,s)$ the basis functions may be written as

$$F_n(\vec{x}) = T_q(x_0) \cdot T_r(x_1) \cdot T_s(x_2)$$

where the polynomial order of $\overline{F_n(x)}$ is $q + r + s$. The expansion of the non-linear transformation and/or its inverse may be limited to a predetermined polynomial order.

In another embodiment, the method comprises the additional step of predetermining a look-up table comprising values of the non-linear transformation and/or its inverse at coordinates within the image space or the image stack, respectively. If the basis functions of the series expansion are the dyadic product of three orthogonal functions, the method may in particular comprise the additional step of predetermining a look-up table comprising values of each of the three orthogonal functions at coordinates within the image space and/or the image stack. Predetermining values of the non-linear transformation and/or its inverse or of the orthogonal functions, respectively, allows the reconstruction of the volumetric image to be performed very efficiently. Caching the predetermined look-up table can speed up the computation even more. The interpolation between values can be implemented very efficiently using the texture shader functionality of a GPU system. To compute the dyadic of the orthogonal functions, specialized hardware such as tensor cores may be used to perform the computations very quickly.

In another embodiment, the method comprises a calibration step for determining parameters of the non-linear transformation and/or its inverse. The calibration preferably involves a known object, such as a known sample or a fiducial. In particular, the calibration step is performed in order to determine the expansion coefficients of the series expansion of the non-linear transformation and/or its inverse. In this embodiment, the parameters of the non-linear transformation and/or its inverse are determined based on the actual optical properties of the light sheet microscope being used. Therefore, the resulting nonlinear transformation very accurately represents the generalized three-dimensional distortion induced by the tilt and optical properties of the optical system.

In another embodiment, the calibration step comprises: Acquiring a reference image of a reference object comprising fiducials at known positions, and determining the parameters of the non-linear transformation such that for each imaged fiducial the distance between the position of the fiducial in the reference image and the known position of the fiducial in the imaged volume transformed by the non-linear transformation is minimized. The aforementioned calibration step will also be referred to as a first embodiment of the calibration step. The fiducials may be small dot-like objects, for example sub-diffraction holes in a mask or fluorescent markers. The use of the reference object makes the calibration step particularly easy to perform. In an example, the expansion coefficients $\vec{c}_n$ of the series expansion can then be found by solving the minimization problem

$$\vec{c}_n = \mathrm{argmin} \left| \sum_{k=0}^{K-1} \vec{x}'_k - \sum_{n=0}^{N-1} \vec{c}_n \cdot F_n(\vec{x}_k) \right|$$

for an appropriate norm $|\cdot|$, where $\vec{x}_k$ corresponds to a known position of one of the fiducials in the imaged volume, and $\vec{x}_k'$ corresponds to the position of said fiducial in the reference image. For the case of the $\mathcal{L}_2$-Norm, this is equivalent to solving a linear least-squares problem, which can be done using, for example, singular value decomposition. For other norms, the minimization problem can be solved with optimization algorithms known from the state of the art. If there is uncertainty about the assignment of the known position of the fiducial in the imaged volume to the position of the fiducial in the reference image, an approximate transformation of the known position or the position in the reference image may be performed first. The approximate transformation may comprise an affine linear transformation based on the optical design data of the optical system. Such an approximate transformation is in particular trivially invertible. Subsequently, a linear assignment problem is solved minimizing the distances between the approximately transformed positions.

In another embodiment, the calibration step comprises acquiring a reference image of a known three-dimensional reference object, and determining the parameters of the non-linear transformation such that a correlation coefficient between the reference object and the reference image is maximized. The calibration step based on determining the correlation coefficient between the reference object and the reference image will also be referred to as a second embodiment of the calibration step. The second embodiment of the calibration step is of comparable computational complexity as the first embodiment of the calibration step involving the reference object comprising fiducials, meaning its equally easy to perform. In particular, the calibration step based on the correlation coefficient can be performed alternatively or additionally to the calibration involving the reference object comprising fiducials.

In another embodiment, the calibration step comprises: Providing a reference object comprising fiducials randomly distributed in three dimensions. Translating the reference object along at least three linearly independent directions, acquiring a reference image each before and after each translation. Determining the parameters of the non-linear transformation such that the difference between the translation of the positions of the fiducials in the reference image and the translation of the positions of the fiducials within the imaged volume transformed by the non-linear transformation is minimized. The translation of the positions of the fiducials within the imaged volume transformed by the non-linear transformation is determined iteratively, using a non-linear transformation determined based on optical design data of the optical system as an initial value. The calibration step using a reference object comprising fiducials randomly distributed in three dimensions will also be referred to as a third embodiment of the calibration step. The third embodiment of the calibration step has the advantage that it is not necessary to independently determine the positions of the fiducials in the reference object, as for example in the first embodiment of the calibration step. The fiducials are randomly distributed, but discrete localizable. For example, the fiducials may be fluorescent beads in a three-dimensional matrix, such as agarose. The reference object is translated by a set of at least 3 linearly independent translations and imaged before and after the translation, yielding at least 4 reference images of the reference object. The translations can be induced, for example, by a motorized stage or a focusing device. The parameter of the non-linear transformation, for example the expansion coefficients of the series expansion, may then be determined by expanding the difference between the positions of the fiducials in the reference image before and after one of the translations in terms of the vector corresponding to the translation. The resulting equation can be reordered to yield a minimization problem relating the difference between the translation of the positions of the fiducials in the reference image and the translation of the positions of the fiducials within the imaged volume transformed by the non-linear transformation. In order to correctly assign the positions of the fiducials after a translation to the positions of the fiducials before the translation, standard algorithms known from the state of the art can be used.

In another embodiment, the light sheet microscope is used to capture at least two volumetric images of the sample in two different channels, each channel being associated with a different distinguishing property of light. The method further comprises the additional steps of determining parameters of the non-linear transformation for each of the channels, and registering the channels based on the determined parameters. The two different channels may be realized by splitting the detection light into different wavelength bands, for example using a beam splitter or a prism, and directing each wavelength band to a different detector. Alternatively or additionally, a detector capable of detecting and separating multiple different wavelength bands may be used, such as a multispectral or hyperspectral detector. To identify structures imaged in different spectral channels, images acquired in different channels must be registered. For example, registration can be achieved by simply determining a separate set of expansion coefficients for each channel and ensuring proper inter-channel calibration. If the expansion coefficients have been determined by the first or second embodiment of the calibration step, the knowledge of the fiducial positions in the reference object or of the known reference object implicitly ensure this inter-channel calibration by using the identical reference object. In the third embodiment of the calibration step, a first channel may be calibrated using the third embodiment. This not only yields the expansion coefficients for this channel, but also the positions of the fiducials in the reference object which are independent of the channel. Thus, these parameters can be used to register the remaining channels using the first embodiment of the calibration step, thereby greatly simplifying the calibration procedure.

In another embodiment, the method comprises: Predetermining a look-up table correlating each voxel of the image stack with at least one of the voxel of the image space based on the inverse of the non-linear transformation and an interpolation scheme. Assigning at least one value of each voxel of the image stack to at least one of the voxel of the image space based on the predetermined look-up table immediately after the value of the respective voxel of the image stack has been acquired by the optical detection system. Image acquisition from commonly used oblique plane microscopes is not fast enough to acquire volumetric images at a frame rate that allows live viewing. However, individual layers may be imaged fast enough. In this embodiment the volumetric image, i.e. the reconstructed image of the sample, is updated continuously as the raw image data is acquired. Whenever a new voxel of the image stack has been acquired, the value of the respective voxel in the image space is replaced, giving a real-time update of the sample. While this embodiment does not necessarily allow for live viewing, it does allow the user to see changes in the sample more quickly than if they had to wait for the entire image stack to be acquired.

In most cases, the point in the volumetric image corresponding to the most recently acquired voxel in the image stack will be located between two or more voxel of the volumetric image. In these cases, a nearest neighbor interpolation scheme, a linear interpolation scheme, or a higher order interpolation scheme may be used. When linear or higher-order interpolation is used, the predetermined lookup table contains a set of image-space voxel and weights for each voxel of the image stack. The weights represent the interpolation scheme. In addition, information is required as to which image stack voxel in the acquisition time sequence has the first non-zero weight for an image space voxel. Whenever this image stack voxel is acquired, the value of the corresponding image space voxel is reset to start a new accumulation for interpolating the voxel value for the current acquisition. Alternatively, if the value of the image stack voxel from the previous acquisition has been stored, the weighted previous value can be subtracted before adding the weighted value of the current acquisition.

A conversion between expansion coefficients of the non-linear transformation and its inverse can, for example, be done numerically by spanning a point grid in one space, calculating the respective points in the other space using the expansion coefficients, and then determining the coefficients for the inverse transform using the first embodiment of the calibration step.

The invention further relates to a light sheet microscope. The light sheet microscope comprises an optical illumination system configured to generate a light sheet, the light sheet extending along a light propagation direction and an extension direction that is perpendicular thereto. A scanning device of the light sheet microscope is configured to illuminate a plurality of layers of the sample arranged successively along a scanning direction using the light sheet such that a volume of the sample is scanned, the volume being spanned by the light propagation direction, the extension direction and the scanning direction, wherein the light propagation direction is tilted by a tilt angle less than 90° with respect to the scanning direction. An optical system of the light sheet microscope is configured to generate one layer image for each of the illuminated layers. The light sheet microscope further comprises an image processing unit. The image processing unit is configured to generate raw image data corresponding to an image stack comprising the layer images, the image stack comprising voxel and being sheared by the tilt angle or by 90° minus the tilt angle and being distorted by the optical properties of the optical system compared to the imaged volume of the sample. The image processing unit is further configured to generate processed image data from the raw image data by defining an image space comprising voxel and corresponding to the imaged volume of the sample, and assigning at least one value to each voxel of the image space based on at least one value of at least one voxel of the image stack, wherein the voxel of the image space and the at least one voxel of the image stack are related by a non-linear transformation. Alternatively or additionally, the image processing unit is configured to generate processed image data from the raw image data by applying the inverse of the non-linear transformation to the raw image data. The non-linear transformation parameterizes the shear of the image stack due to the tilt of the image stack and the image errors induced by the optical system, and the processed image data corresponds to the volumetric image of the sample.

The light sheet microscope has the same advantages as the method. In particular, the light sheet microscope can be supplemented with the features of the dependent claims directed at the method. Furthermore, the method can be supplemented with the features described in this document in connection with the light sheet microscope.

In an embodiment, the optical illumination system is configured to generate the light sheet in an intermediate image space. The optical system comprises an optical relay system configured to image the light sheet into the sample and to image detection light coming from the sample into the intermediate image space. The optical system further comprises an optical detection system configured to generate one layer image for each of the intermediate images of the illuminated layers, the optical axis of the optical detection system being tilted with respect to the optical axis of the optical relay system by an angle equal to the tilt angle or by an angle equal to 90° minus the tilt angle. In this embodiment, the image stack is sheared by the angle of the optical detection system, and distorted by the optical properties of the optical relay system and the optical detection system compared to the imaged volume of the sample. The non-linear transformation parameterizes the shear of the image stack due to the tilt of the optical detection system and the image errors induced by the optical relay system and the optical detection system, into the generalized three-dimensional distortion.

Short Description of the Figures

Hereinafter, specific embodiments are described referring to the drawings, wherein:

Figure 1     is a schematic view of a first embodiment of a light sheet microscope in which a scanning direction is lateral to the optical axis of an optical relay system;

Figure 2     is a schematic view of a volume of a sample imaged by the light sheet microscope according to Figure 1;

Figure 3     is a schematic view of a second embodiment of the light sheet microscope in which the scanning direction is parallel to the optical axis of the optical relay system;

Figure 4        is a schematic view of a volume of a sample imaged by the light sheet microscope according to Figure 3;

Figure 5        is a flowchart of a first embodiment of a method for generating a volumetric image of a sample using the light sheet microscope;

Figure 6        is a flowchart of a second embodiment of a method for generating a volumetric image of a sample using the light sheet microscope;

Figure 7        is a flowchart of a first embodiment of a calibration step of the method according to Figure 5;

Figure 8        is a flowchart of a second embodiment of the calibration step of the method according to Figure 5;

Figure 9        is a flowchart of a third embodiment of the calibration step of the method according to Figure 5;

Figure 10       is a schematic view of points in the volumetric image that have been reconstructed using the method according to claim 5; and

Figure 11       is a schematic view of points in a volumetric image that have been reconstructed using a method according to the state of the art.

Detailed Description

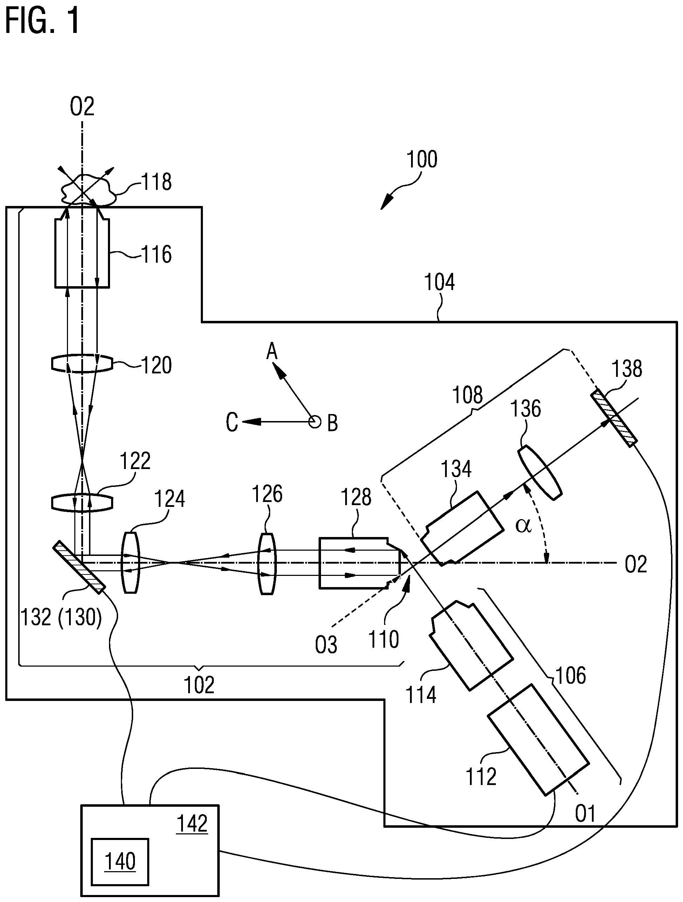

Figure 1 is a schematic view of a first embodiment of a light sheet microscope 100 in which a scanning direction C is lateral to the optical axis O2 of an optical relay system 102.

The light sheet microscope 100 has an optical system 104 comprising an optical illumination system 106, the optical relay system 102, and an optical detection system 108. The optical axis O3 of the optical detection system 108 is tilted relative to the optical axis O2 of the optical relay system 102 by an angle $\alpha$. The optical axis O1 of the optical illumination system 106 is perpendicular to the optical axis O3 of the optical detection system 108, so that the optical axis O1 of the optical illumination system 106 is tilted with respect to the optical axis O2 of the optical relay system 102 by an angle $90° - \alpha$. The three aforementioned optical axes O1, O2, O3 intersect in an intermediate image space 110.

The optical illumination system 106 comprises an illumination light source 112 and an illumination objective 114. The illumination light source 112 generates a light sheet, for example using a cylindrical lens not explicitly shown in Figure 1. Alternatively, the illumination light source 112 may generate a quasi-static light sheet by means of a dedicated scanning element. The light sheet extends in a light propagation direction A and an expansion direction B perpendicular thereto. The two directions A, B are indicated by an oblique coordinate system shown in Figure 1. The illumination objective 114 images the light sheet into the intermediate image space 110.

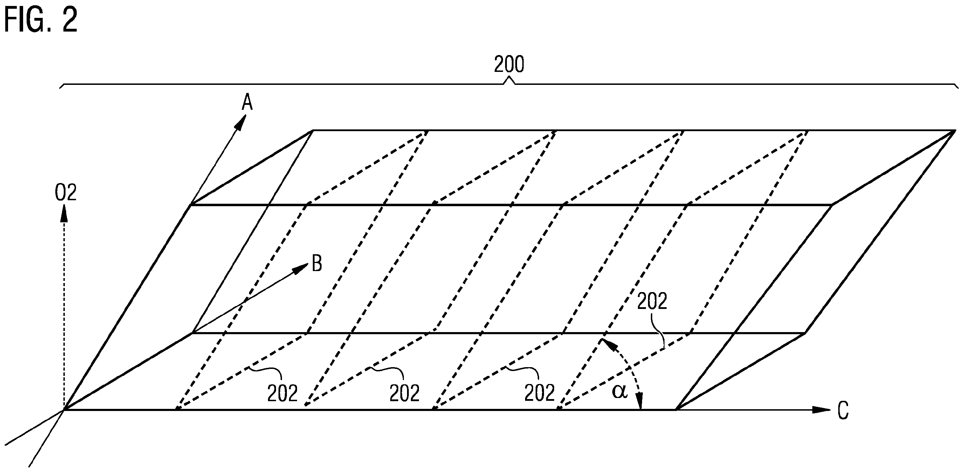

The optical relay system 102 comprises an objective 116 facing a sample 118, a first tube lens 120, a first ocular 122, a second ocular 124, a second tube lens 126 and a projection objective 128, which are arranged in this order along the optical axis O2 of the optical relay system 102. The optical relay system 102 images the light sheet from the intermediate image space 110 into the sample 118. Since the optical axis O1 of the optical illumination system 106 is tilted by $90° - \alpha$ with respect to the optical axis O2 of the optical relay system 102, the light propagation direction A is also tilted by $90° - \alpha$ with respect to the optical axis O2 of the optical relay system 102. Layers 202 (cf. Figure 2) within the sample 118 which are illuminated by the light sheet are imaged back into the intermediate image space 110 by the optical relay system 102 as an intermediate image.

Additionally, a scanning device 130 is arranged between the first ocular 122 and the second ocular 124. The scanning device 130 exemplary comprises a movable mirror 132 that deflects the optical axis O2 of the optical relay system 102. The movable mirror 132 can be used to move the light sheet through the sample 118 along the scanning direction C that is perpendicular to the optical axis O2 of the optical relay system 102 in the sample 118. This allows the successive layers 202 of the sample 118 along the scanning direction C to be illuminated so as to scan a volume 200 (c.f. Figure 2) of the sample 118. An exemplary geometry of the scanned volume 200 is described below with reference to Figure 2.

The optical detection system 108 comprises a detection objective 134, a tube lens 136 and an image sensor 138, arranged in this order starting from the intermediate image space 110. The intermediate images of the illuminated layers 202 in the intermediate image space 110 are imaged onto the image sensor 138 by the detection objective 134 and the tube lens 136. In this way, layer images are generated on the image sensor 138, each layer image corresponding to one of the layers 202 in the sample 118 that are illuminated with the light sheet. The layer images are captured by the image sensor 138 in form of raw image data, and collected into an image stack.

In order to process the image stack into a faithful representation of the imaged volume 200 of the sample 118, the raw image data needs to be processed. For that, the light sheet microscope 100 comprises an image processing unit 140.

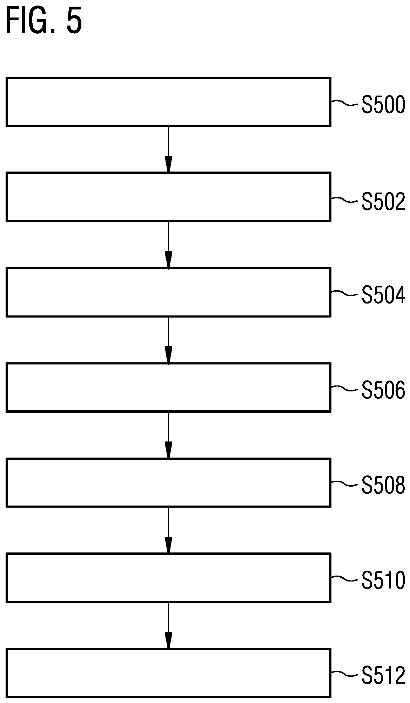

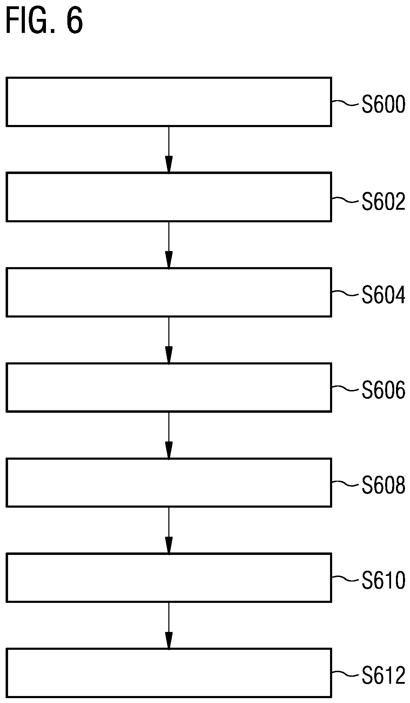

The image processing unit 140 processes the raw image data corresponding to the image stack to produce processed image data corresponding to a volumetric image of the scanned volume 200 of the sample 118. The image processing unit 140 is exemplary shown as part of a control unit 142 of the light sheet microscope 100. The control unit 142 is configured to control the elements of the light sheet microscope 100, and to perform at least one of the methods for generating the volumetric image described below with reference to Figures 5 and 6.

Figure 2 is a schematic view of the volume 200 of the sample 118 imaged by the light sheet microscope 100 according to Figure 1.

The scanned volume 200 comprises the layers 202 illuminated by the light sheet which are successively arranged along the scanning direction C. In the embodiment shown in Figure 1, the scanned volume 200 has substantially the shape of a parallelepiped that is spanned by the light propagation direction A, the extension direction B, and the scanning direction C. Further, the scanned volume 200 is characterized by a tilt angle $\alpha$ which in this embodiment is equal to the angle $\alpha$ the optical detection system 108 is tilted by. The volume 200 shown in Figure 2 results from a shearing of a cuboid by a shearing angle of 90° - $\alpha$ in the direction of the scanning direction C, where the angle $\alpha$ is the tilt angle $\alpha$ which is enclosed by the light propagation direction A and the scanning direction C. Additionally, the volume 200 is distorted due to, for example, field curvature introduced by the optical relay system 102. Additional distortion is introduced into the actually captured image stack, i.e. the raw image data, by the optical detection system 108, when the intermediate images of the illuminated layers 202 in the intermediate image space 110 are imaged onto the image sensor 138 by the optical detection system 108. When the raw image data is collected, information about all these distortions is lost, since the image stack is assumed to be a simple cuboid. In order to reconstruct a faithful image of the volume 200, the raw image data is processed by the image processing unit 140, for example according to one of the methods described below with reference to Figures 5 and 6.

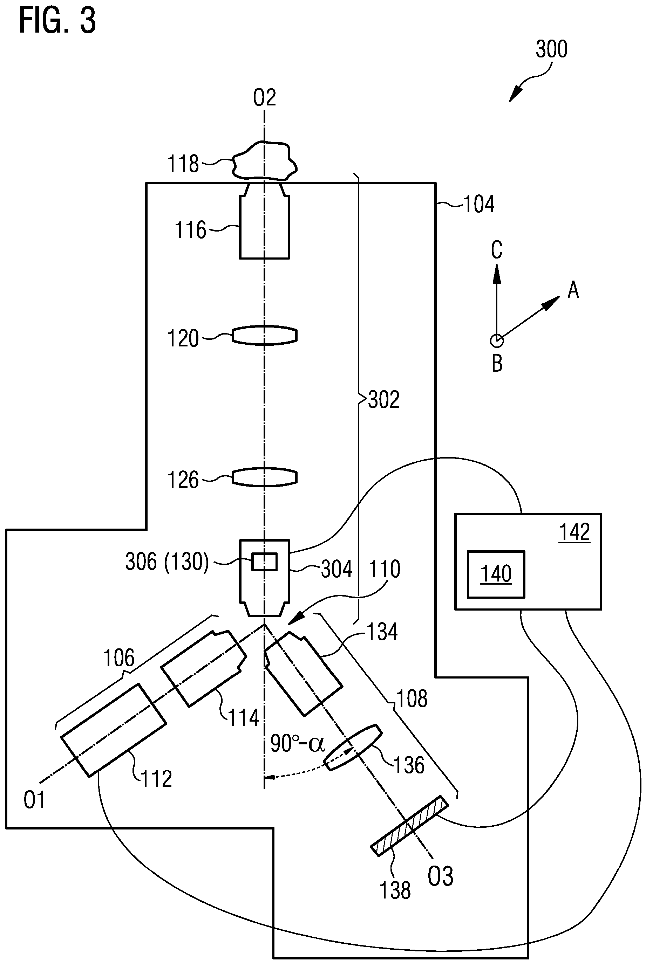

Figure 3 is a schematic view of a second embodiment of the light sheet microscope 300 in which the scanning direction is parallel to the optical axis O2 of an optical relay system 302.

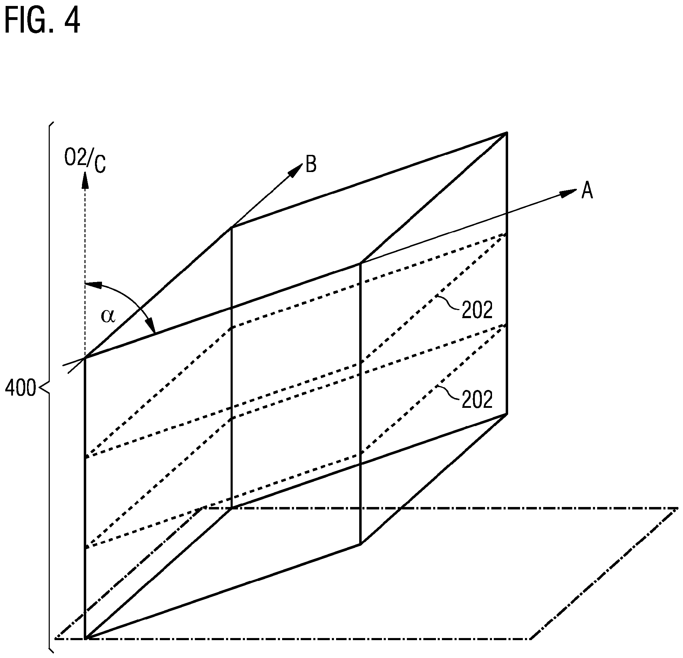

In the embodiment shown in Figure 1, the scanning direction C is transverse to the optical axis O2 of the optical relay system 302. In contrast, in the embodiment shown in Figure 2 the light sheet is moved axially to scan a volume 400 (c.f. Figure 4), i.e. along the optical axis O2 of the optical relay system 302. An exemplary geometry of the volume 400 scanned by the light sheet microscope 300 is described below with reference to Figure 4.

In the present embodiment, the optical relay system 302 comprises a projection objective 304, the two tube lenses 120, 126 and the objective 116 facing the sample 118, arranged in this order starting from the intermediate image space 110. The projection objective 304 comprises an electronic focusing device 306 that is configured to move the focus of the optical relay system 302 inside the sample 118. Thereby, the electronic focusing device 306 allows the light sheet to be moved along the optical axis O2 of the optical relay system 302. In other words: In the embodiment shown in Figure 2, the scanning device 130 is formed by the electronic focusing device 306. By means of the electronic focusing device 306, the light sheet and at the same time the detection plane coplanar therewith are movable along the optical axis O2 of the optical relay system 302. The corresponding layer image of the layer 202 illuminated by the light sheet is recorded by the image sensor 138.

As in the embodiment describe above with reference to Figures 1 and 2, the optical axis O3 of optical detection system 108 of the present embodiment is tilted with respect to the optical axis O2 of the optical relay system. In this embodiment, the optical axis O3 of optical detection system 108 is tilted by an angle of 90° - $\alpha$, where the angle $\alpha$ is the tilt angle $\alpha$ of the imaged volume.

Figure 4 is a schematic view of the volume 400 of the sample 118 imaged by the light sheet microscope 300 according to Figure 3.

The volume 400 scanned by the light sheet microscope 300 comprises the illuminated layers 202, and has substantially the shape of a parallelepiped that is spanned by the light propagation direction A, the extension direction B, and the scanning direction C. Additionally, the volume 400 is characterized by the tilt angle $\alpha$. The volume 400 shown in Figure 4 results from a shearing of a cuboid by an angle of 90° minus the tilt angle $\alpha$ in the direction of the scanning direction C. Similar to the volume 200 shown in Figure 2, the volume 400 shown in Figure 4 is distorted due to the optical properties of, for example, the optical relay system 302. Additional distortion is introduced into the raw image data by the optical detection system 108. As in the first embodiment, in order to faithfully reconstruct the scanned volume 400, the raw image data needs to be processed. This image processing can be done by the image processing unit 140, for example according to one of the methods described in the following with reference to Figures 5 and 6.

Figure 5 is a flowchart of a first embodiment of the method for generating a volumetric image of a sample 118 using the light sheet microscope 100, 300.

The aim of the method is to faithfully reconstruct the volume 200, 400 imaged by a light sheet microscope, for example one of the light sheet microscopes 100, 300 described above with reference to Figures 1 to 4. The method can also be performed to reconstruct volumes imaged by other light sheet microscopes. Since in oblique plane microscopy the imaged volume is sheared, this reconstruction is often also referred to as deskewing. The method shown is performed by the control unit 142 by way of example only. The method may also be performed, at least in part, manually or by means of an external control device, such as a computer connected to the light sheet microscope 100, 300.

The method is started in step S500. In step S502 the control unit 142 controls the optical illumination system 106 to generate a light sheet. The light sheet is generated in the intermediate image space 110 and then imaged by the optical relay system 102 into the sample 118, where the light sheet extends along the light propagation direction A and the extension direction B perpendicular thereto. In step S504 the control unit 142 controls the scanning device 130 to illuminate the layers 202 in the sample 118 arranged successively along the scanning direction C such that the volume 200, 400 of the sample 118 is scanned. Step S506 is performed concurrently to step S504, and comprises the control unit 142 controlling the optical detection system 108 to generate one layer image for each of the illuminated layers 202. The layer images are collected into raw image data corresponding to the image stack in step 506. The image stack comprises voxel. Each voxel corresponds to a data point and comprises one or more values, for example a brightness value, RGB values or values associated with different fluorescence channels. At this point, the image stack corresponds to an image of the scanned volume 200, 400 that is both sheared due to the tilt of the optical detection system 108, and distorted by the image errors induced by the optical relay system 102 and the optical detection system 108 compared to the actual scanned volume 200, 400.

In order to reconstruct a more faithful image of the scanned volume 200, 400, the raw image data is processed by the image processing unit 140 into processed image data starting in step S508. In step S508 the image processing unit 140 defines an image space comprising voxel and corresponding to the imaged volume 200, 400 of the sample 118. Within this image space the volumetric image is reconstructed from the raw image data in the following step. In step S510 each voxel in the image space is assigned one or more values based on the value or values of at least one corresponding voxel in the image stack. To find the corresponding voxel in the image stack a non-linear transformation is used that parametrizes the tilt of the image stack compared to the imaged volume 200, 400 in the sample 118, and the optical distortions induced by, for example, the optical relay system 102 and the optical detection system 108. Both the tilt and the optical distortions are combined into a generalized three-dimensional distortion by the non-linear transformation which in a sense is a coordinate transformation from the imaged volume 200, 400 in the sample 118 to the image stack. The non-linear transformation is a vector-valued function and may be given in any form. For instance, the non-linear transformation may be determined as a function whose mathematical form is derived from, for example, the optical design data of the light sheet microscope 100, 300. In particular, the non-linear transformation is determined as a series expansion, i.e. a finite sum of the form

$$\sum_{n=0}^{N-1} \vec{c}_n \cdot F_n(\vec{x})$$

where $\vec{x}$ are points in the sample 118 $F_n(\vec{x})$ are basis functions of the n-th term, and $\vec{c}_n$ are expansion coefficients of the n-th term. Preferably, the basis functions $F_n(\vec{x})$ may be written as the dyadic product of three orthogonal functions each, each orthogonal function being associated with one of the three coordinate directions

$$F_n(\vec{x}) = T_q(x_0) \cdot T_r(x_1) \cdot T_s(x_2).$$

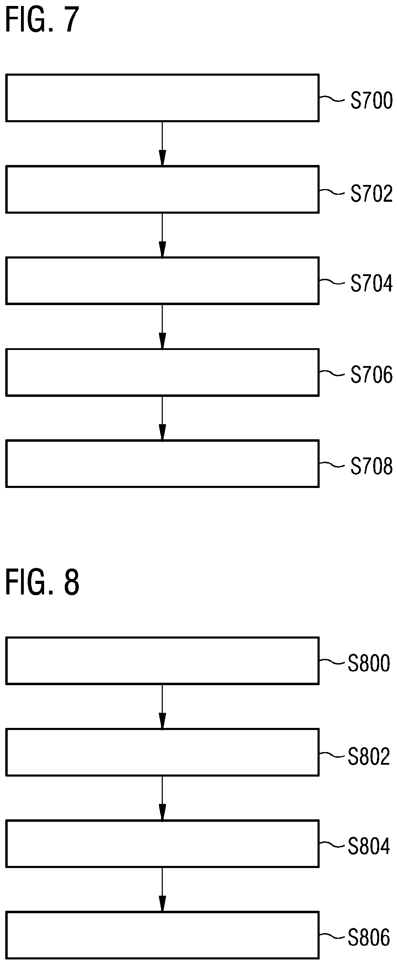

This requires a mapping from the single index *n* to a multi-index (*q,r,s*). A preferred choice of orthogonal functions are Chebyshev polynomials of the first kind. The expansion coefficients $\vec{c}_n$ may be determined from the optical design data of the light sheet microscope 100, 300 and/or from a calibration step performed before step S502. Exemplary embodiments of such a calibration step are described below with reference to Figures 7 to 9.

The image processing unit 140 may construct the volumetric image in the image space voxel by voxel. For each voxel in the image space, the image processing unit 140 determines a corresponding point in the image stack using the non-linear transformation. Since the image sack is divided into voxel, the point in the image stack may fall between two or more voxel. In this case, the image processing unit 140 may, for example, choose the voxel closest to the point as the corresponding voxel for determining the value or values assigned to the voxel in the image space. Alternatively, the image processing unit 140 may apply a suitable interpolation scheme to interpolate between the values of the voxel closest to the corresponding point in order to determine the value or values assigned to the voxel in the image space. In order to speed up the determination of the corresponding point in the image stack, the values of the non-linear transformation for each of the voxel of the image space may be predetermined and cached. Further, the image processing unit 140 may comprise specialized hardware, such as a GPU or a tensor core, to facilitate a faster computation.

Once the volumetric image has been fully constructed in the image space, the method is ended in step S512.

Figure 6 is a flowchart of a second embodiment of the method for generating a volumetric image of a sample 118 using the light sheet microscope 100, 300.

The second embodiment of the method is distinguished from the first embodiment in how the volumetric image is constructed. While the first embodiment uses the non-linear transformation to fill the predefined image space with values, the second embodiment uses the inverse of the non-linear transformation to transform the image stack into the volumetric image. Since the non-linear transformation is essentially a coordinate transformation from the imaged volume 200, 400 in the sample 118 to the image stack, the inverse of the non-linear transformation is a coordinate transformation from the image stack to the imaged volume 200, 400 in the sample 118. Thus, the inverse of the non-linear transformation may be used to either transform individual voxel of the image stack into voxel of the volumetric image, or to transform the entire image stack at once into the volumetric image. Only as an example, this embodiment is described as a method in which individual voxels are transformed.

The method is started in step S600. In the optional step S602 the image processing unit 140 predetermines the values of the inverse of the non-linear transformation for each of the voxel of the image stack. Additionally, the image processing unit 140 may predetermine the voxel closest to the determined points in the volumetric image for each voxel in the image stack. The voxel in the volumetric image may be determined by a nearest neighbor scheme, or by a suitable interpolation scheme. When an interpolation scheme is used, the image processing unit 140 also predetermines a set of weights for each voxel in the image stack representing the interpolation scheme.

The steps S604 to S608 are identical to the steps S502 to S506 described above with reference to Figure 5. At this point, the control unit 142 has generated the raw image data corresponding to the image stack that needs to be deskewed in order to produce the volumetric image. The deskewing is performed in the following step S610, in which the image processing unit 140 assigns the value or values of each voxel in the image stack to one or more voxel in the volumetric image based on the values of the inverse of the non-linear function predetermined in step S602, and the set of weights, if applicable. If the values of the inverse of the non-linear function, and the weights have not been predetermined in step S602, the image processing unit 140 determines these in step S610 as necessary.

In particular, the image processing unit 140 assigns the value or values of each voxel in the image stack to one or more voxel in the volumetric image as said voxel in the image stack is acquired. In other words, the image processing unit 140 updates the volumetric image with live data acquired by the light sheet microscope 100, 300. Whenever an image stack voxel is acquired, the image processing unit 140 may reset the value of the corresponding image space voxel to start a new accumulation for interpolating the voxel value for the current acquisition. Alternatively, if the value of the image stack voxel from the previous acquisition has been stored, the image processing unit 140 may subtract the weighted previous value before adding the weighted value of the current acquisition.

The method is ended in step S612.

Figure 7 is a flowchart of a first embodiment of the calibration step of the method according to Figure 5.

In the calibration step, the expansion coefficients $\vec{c}_n$ of the non-linear function are determined. In the first embodiment of the calibration step, a reference object comprising fiducials, such as sub-diffraction holes in a mask or fluorescent markers. The fiducials are arranged at known positions $\vec{x}_k$ within the reference object.

The calibration step is started in sub-step S700. In sub-step S702, the light sheet microscope 100, 300 captures a reference image of the reference object, and saves the corresponding image stack, i.e. the not yet deskewed raw image data. In sub-step S704 the image processing unit 140 assigns each image of a fiducial in the image stack to one fiducial in the imaged volume 200, 400, i.e. the reference object. If there is uncertainty about the assignment, the image processing unit 140 may first perform an approximate transformation of the known positions $\vec{x}_k$ or the position $\vec{x}'_k$ the reference image, for example based on the optical design data of the light sheet microscope 100, 300. The image processing unit 140 may then solve a linear assignment problem minimizing the distances between the approximately transformed positions.

In sub-step S706 the image processing unit 140 determines the expansion coefficients $\vec{c}_n$ of the series expansion by solving the minimization problem

$$\vec{c}_n \ = \ \operatorname{argmin} \left| \sum_{k=0}^{K-1} \vec{x}'_k - \sum_{n=0}^{N-1} \vec{c}_n \cdot F_n(\vec{x}_k) \right|$$

for an appropriate norm $|\cdot|$, for example the $\mathcal{L}_2$-Norm for which the minimization problem is equivalent to solving a linear least-squares problem.

Once all needed expansion coefficients $\vec{c}_n$ have been determined, the calibration step is ended in sub-step S708.

Figure 8 is a flowchart of a second embodiment of the calibration step of the method according to Figure 5.

The second embodiment of the calibration step is distinguished from the first embodiment in that the expansion coefficients $\vec{c}_n$ are determined based on image correlation. For that, a known three dimensional reference object is used, i.e. a three dimensional reference object for which, for example, a three dimensional model or a volumetric image with a high fidelity exist.

The calibration step is started in sub-step S800. In sub-step S802, the light sheet microscope 100, 300 captures a reference image of the three dimensional reference object, and saves the corresponding image stack. In step S804, the image processing unit 140 determines the expansion coefficients $\vec{c}_n$ such that a correlation coefficient between the reference object and the reference image is maximized. In an example, a straightforward extension to more than two dimensions of the algorithm presented in G. Evangelidis et al., IEEE Trans. Pattern Recog. 31 (2008) is used to determine the correlation coefficient between the reference object and the reference image. Using the above described parametrization of the non-linear transformation as a linear superposition of basis functions $F_n(\vec{x}_k)$, the calculation of the required Jacobian in equation (5) of Evangelidis et al. is trivial. The optimization problem for the enhanced correlation coefficient is then solved using an adaption of the algorithm from Evangelidis et al., or by direct optimization with other optimization algorithms from the state of the art.

Once all needed expansion coefficients $\vec{c}_n$ have been determined, the calibration step is ended in sub-step S806.

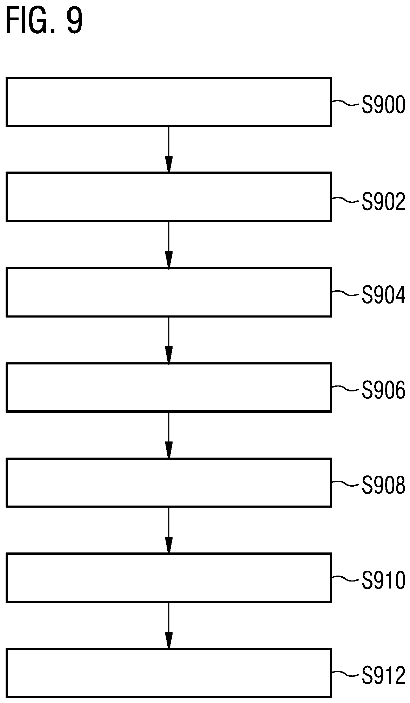

Figure 9 is a flowchart of a third embodiment of the calibration step of the method according to Figure 5.

In the third embodiment of the calibration step, a reference object is used that is similar to the reference object used in the first embodiment. The reference object used in the third embodiment of the calibration step comprises fiducials randomly distributed in three dimensions. However, the positions of the fiducials do not have to be known.

The calibration step is started in sub-step S900. In sub-step S902, the light sheet microscope 100, 300 captures a reference image of the reference object, and saves the corresponding image stack. In step S904, the reference object is moved according to a translation $\vec{s}_i$, for example by means of a motorized stage controlled by the control unit 142. The steps S902 and S904 are repeated until the reference object has been moved at least three times according to three linearly independent translations $\vec{s}_i$. Then, in step S906 following the last translation, the light sheet microscope 100, 300 captures another reference image of the reference object, and saves the corresponding image stack. In step S908, the image processing unit 140 assigns the positions of the fiducials in the reference images before and after each translation to each other. This assignment may be based on an initial estimate for the non-linear transformation, for example an estimate based on the optical design data of the light sheet microscope 100, 300. Once the positions of the fiducials in the reference images before and after each translation have been assigned to each other, the image processing unit 140 determines the parameters of the non-linear transformation based on the initial estimate in step S910. In particular, the image processing unit 140 determines the parameters of the non-linear transformation such that the difference between the translation of the positions of the fiducials in the reference image and the translation of the positions of the fiducials within the imaged volume 200, 400 transformed by the non-linear transformation is minimized.

In an example, the differential movement of the image of a fiducial at the position $\vec{x}_k$ in the sample 118 between two translations $\vec{s}_i$ and $\vec{s}_j$ is described as

$$\vec{f}(\vec{x}_k - \vec{s}_i) - \vec{f}(\vec{x}_k - \vec{s}_j) \approx \sum_{n=0}^{N-1} \vec{c}_n \cdot \left[ (\vec{s}_i - \vec{s}_j) \cdot \vec{\nabla} F_n(\vec{x}_k) \right].$$

The expansion coefficients $\vec{c}_n$ of the series expansion can then be determined by solving the optimization problem

$$\mathrm{argmin} \left| \sum_{k=0}^{K-1} \sum_{i=0}^{I-1} \sum_{i \neq j} \vec{x}_k'^{(i)} - \vec{x}_k'^{(j)} - \sum_{n=0}^{N-1} \vec{c}_n \cdot \left[ (\vec{s}_i - \vec{s}_j) \cdot \vec{\nabla} F_n(\vec{x}_k) \right] \right|$$

for an appropriate norm $|\cdot|$, where $\vec{x}_k'^{(i)}$ is the position of the fiducial in the reference image with the applied translation $\vec{s}_i$, which can be determined as in the second embodiment of the calibration step.

The solution of the minimization problem requires the evaluation of the gradient at the positions $\vec{x}_k$ in the sample 118, which are not known. This can be solved by a self-consistent iterative method. As initial value, the positions $\vec{x}_k$ in the sample 118 can be approximated from design data and the positions $\vec{x}_k'^{(i)}$ in the reference image, in particular for a selected translation $\vec{s}_i$, such as the null vector. Then after solving the minimization problem to find new expansion coefficients $\vec{c}_n$, the positions $\vec{x}_k$ in the sample 118 can be corrected using the implicit function theorem, by calculating a shift of the positions of the fiducials in the reference due to the newly estimated expansion coefficients $\vec{c}_n$ as

$$\Delta \vec{x}_k' = \sum_{n=0}^{N-1} \left( \vec{c}_n^{\ (new)} - \vec{c}_n^{\ (old)} \right) F_n(\vec{x}_k),$$

calculating the local Jacobian as

$$J_{ij}(\vec{x}_k) = \sum_{n=0}^{N-1} \left( \hat{e}_i \cdot \vec{c}_n^{\ (new)} \right) \frac{\partial F_n(\vec{x}_k)}{\partial x_j}$$

with the coordinate direction unit vectors $\hat{e}_i$, and finally correcting the estimated $\vec{x}_k$ differentially as

$$\vec{x}_k \leftarrow \vec{x}_k + J(\vec{x}_k)^{-1} \cdot \Delta\vec{x}_k'.$$

After this correction of the estimated positions $\vec{x}_k$ in the sample 118, a new set expansion coefficients $\vec{c}_n$ can be determined in a next iteration. Once the values of the expansion coefficients $\vec{c}_n$ change less than a predetermined threshold between the iteration steps, the current set of expansion coefficients $\vec{c}_n$ is determined as the expansion coefficients $\vec{c}_n$ of the non-linear transformation.

The calibration step is then ended in step S912.

The method described with reference to Figures 5 and 6 may also comprise an additional step in which volumetric images captured in different channels are registered. The registration step may in particular be based on the calibration step described with reference to Figures 7 to 9. For example, the first and second embodiments of the calibration step automatically ensure inter-channel calibration by using the identical reference object for the calibration in each channel. If the position of the fiducials inside the reference objects are not known, a first channel may be calibrated using the third embodiment of the calibration step. This not only yields the expansion coefficients for this channel, but also the positions of the fiducials in the reference object which are independent of the channel. Thus, these parameters can be used to register the remaining channels using the first embodiment of the calibration step, thereby greatly simplifying the calibration procedure.

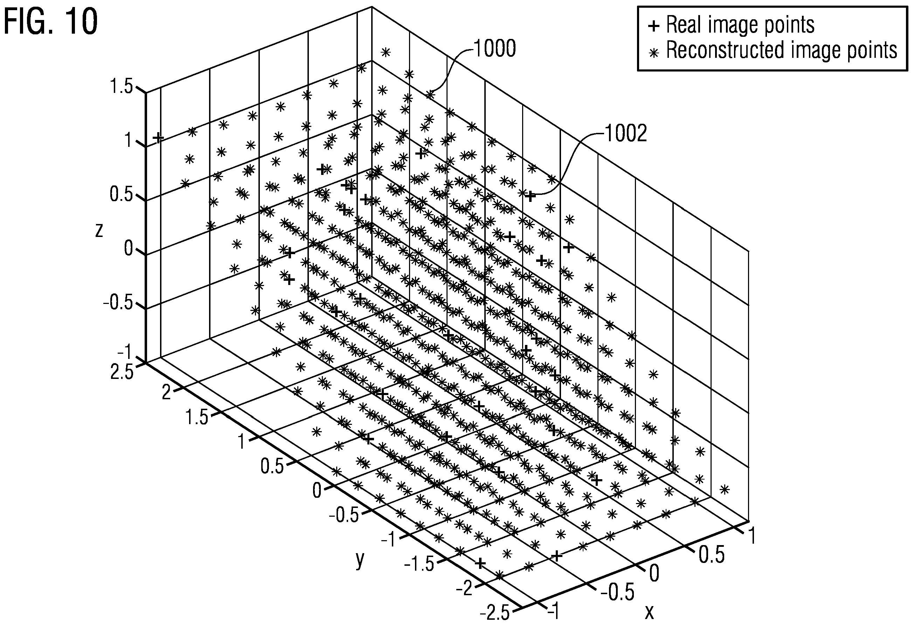

Figure 10 is a schematic view of points 1000 in the volumetric image that have been reconstructed using the method according to claim 5.

In Figure 10 the reconstructed points 1000 in the volumetric image are laid over the points 1002 in the scanned volume 200, 400 from which the points 1000 in the volumetric image have been reconstructed. In other words, Figure 10 shows both the volumetric image and the scanned volume 200, 400 of the sample 118 at the same time. The points 1000 in the volumetric image have been reconstructed using a series expansion of the non-linear transformation having a polynomial order of five. As can be seen in Figure 10, the points 1000 in the volumetric image coincide with the points 1002 in the imaged volume 200, 400 within a very small margin of error. Thus, approximating the non-linear transformation by a fifth order polynomial expansion already yields a very faithful reconstruction of the imaged volume 200, 400.

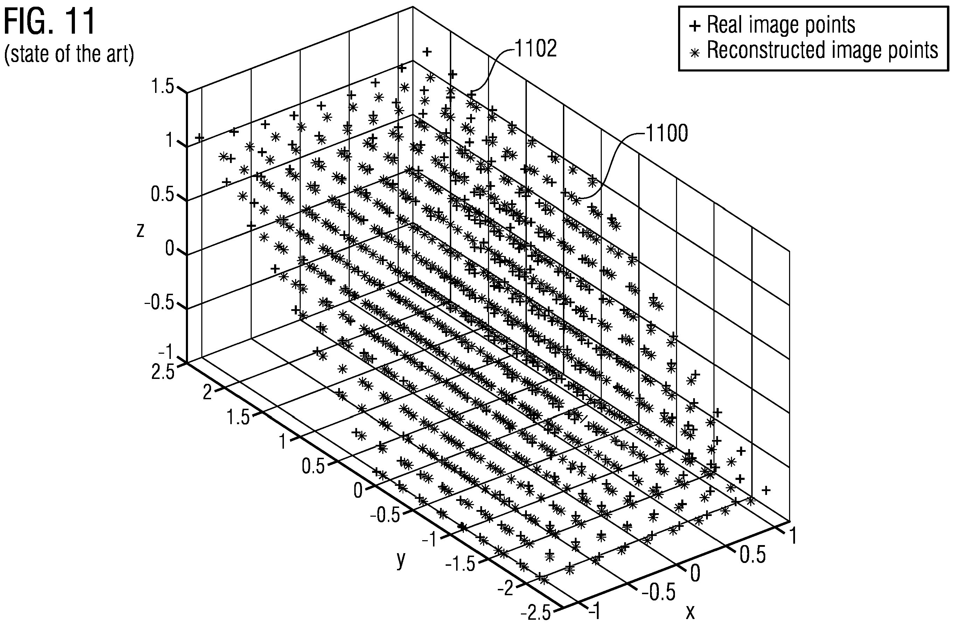

Figure 11 is a schematic view of points 1100 in a volumetric image that have been reconstructed using a method according to the state of the art.

As in Figure 10, Figure 11 shows the reconstructed points 1100 in the volumetric image laid over the points 1102 in the scanned volume 200, 400 from which the points 1100 in the volumetric image have been reconstructed. However, in Figure 11 a linear transformation has been used to reconstruct the points 1100 in the volumetric image. The linear transformation only parametrizes the sheering of the volumetric image due to the tilt of the optical detection system 108. Thus, as can be seen in Figure 11, the reconstructed points 1100 significantly differ from their corresponding points 1102 in the imaged volume 200, 400.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step.

Analogously, aspects described in the context of a method step also represent a description of a corresponding block or item or feature of a corresponding apparatus.

Reference signs

| | | |
|---|---|---|
| 100 | | light sheet microscope |
| 102 | | optical relay system |
| 104 | | optical system |
| 106 | | optical illumination system |
| 108 | | optical detection system |
| 110 | | intermediate image space |
| 112 | | illumination light source |
| 114 | | illumination objective |
| 116 | | objective |
| 118 | | sample |
| 120 | | tube lens |
| 122, 124 | | ocular |
| 126 | | tube lens |
| 128 | | projection objective |
| 130 | | scanning device |
| 132 | | movable mirror |
| 134 | | detection objective |
| 136 | | tube lens |
| 138 | | image sensor |
| 140 | | image processing unit |
| 142 | | control unit |
| 300 | | light sheet microscope |
| 302 | | optical relay system |
| 304 | | projection objective |
| 306 | | electronic focusing device |
| 1000, 1002, 1100, 1102 | | point |

**Claims**

1. A method for generating a volumetric image of a sample (118) using a light sheet microscope (100, 300), the method comprising the following steps:

   a) generating a light sheet, said light sheet extending along a light propagation direction (A) and an extension direction (B) perpendicular thereto;
   b) illuminating a plurality of layers (202) of the sample (118) arranged successively along a scanning direction (C) using the light sheet such that a volume (200, 400) of the sample (118) is scanned, the volume (200, 400) being spanned by the light propagation direction (A), the extension direction (B) and the scanning direction (C), wherein the light propagation direction (A) is tilted by a tilt angle ($\alpha$) less than 90° with respect to the scanning direction (C);
   c) generating one layer image for each of the illuminated layers (202) using an optical system (104); and
   d) generating raw image data corresponding to an image stack comprising the layer images, the image stack comprising voxel and being sheared by the tilt angle ($\alpha$) or by 90° minus the tilt angle ($\alpha$) and being distorted by the optical properties of the optical system (104) compared to the imaged volume (200, 400) of the sample (118);
   e) generating processed image data from the raw image data by defining an image space comprising voxel and corresponding to the imaged volume (200, 400) of the sample (118), and assigning at least one value to each voxel of the image space based on at least one value of at least one voxel of the image stack, wherein the voxel of the image space and the at least one voxel of the image stack are related by a non-linear transformation; or
   f) generating processed image data from the raw image data by applying the inverse of the non-linear transformation to the raw image data;
   wherein the non-linear transformation parameterizes the shear of the image stack due to the angle between the scan direction (C) and the light propagation direction (A) and the image errors induced by the optical system (104), and
   wherein the processed image data corresponds to the volumetric image of the sample (118).

2. The method according to claim 1, wherein the non-linear transformation and/or its inverse are determined based at least on optical design data of the optical system (104).

3. The method according to claim 1 or 2, wherein the non-linear transformation and/or its inverse are determined as a series expansion, preferably a series expansion using orthogonal functions as basis functions.

4. The method according to claim 3, wherein the basis functions of the series expansion are the dyadic product of three orthogonal functions, each of the three orthogonal functions corresponding to one of three coordinate directions.

5. The method according to claim 4, comprising the additional step of predetermining a look-up table comprising values of each of the three orthogonal functions at coordinates within the image space and/or the image stack.

6. The method according to any one of the preceding claims, comprising the additional step of predetermining a look-up table comprising values of the non-linear transformation and/or its inverse at coordinates within the image space or the image stack, respectively.

7. The method according to any one of the preceding claims, comprising a calibration step for determining parameters of the non-linear transformation and/or its inverse.

8. The method according to claim 7, wherein the calibration step comprises: acquiring a reference image of a reference object comprising fiducials at known positions; and determining the parameters of the non-linear transformation such that for each imaged fiducial the distance between the position of the fiducial in the reference image and the known position of the fiducial in the imaged volume (200, 400) transformed by the non-linear transformation is minimized.

9. The method according to claim 7, wherein the calibration step comprises acquiring a reference image of a known three-dimensional reference object, and determining the parameters of the non-linear transformation such that a correlation coefficient between the reference object and the reference image is maximized.

10. The method according to claim 7, wherein the calibration step comprises:

   providing a reference object comprising fiducials randomly distributed in three dimensions;
   translating the reference object along at least three linearly independent directions, acquiring a reference image each before and after each translation; and
   determining the parameters of the non-linear transformation such that the difference between the translation of the positions of the fiducials in the reference image and the translation of the positions of the fiducials within the imaged volume (200, 400) transformed by the non-linear transformation is minimized;
   wherein the translation of the positions of the fiducials within the imaged volume (200, 400) transformed by the non-linear transformation is determined iteratively, using a non-linear transformation determined based on optical design data of the optical system (104) as an initial value.

11. The method according to any one of the preceding claims, wherein the light sheet microscope (100, 300) is used to capture at least two volumetric images of the sample (118) in two different channels, each channel being associated with a different distinguishing property of light; and wherein the method comprises the additional steps of determining parameters of the non-linear transformation for each of the channels, and registering the channels based on the determined parameters.

12. The method according to any one of the preceding claims, wherein the method comprises:

   predetermining a look-up table correlating each voxel of the image stack with at least one of the voxel of the image space based on the inverse of the non-linear transformation and an interpolation scheme, and
   assigning at least one value of each voxel of the image stack to at least one of the voxel of the image space based on the predetermined look-up table immediately after the value of the respective voxel of the image stack has been acquired by the optical detection system (108).

13. The method according to claim 12, wherein a nearest neighbor interpolation scheme, a linear interpolation scheme, or a higher order interpolation scheme is used.

14. A light sheet microscope (100, 300), comprising

an optical illumination system (106) configured to generate a light sheet, the light sheet extending along a light propagation direction (A) and an extension direction (B) that is perpendicular thereto;

a scanning device (130) configured to illuminate a plurality of layers (202) of the sample (118) arranged successively along a scanning direction (C) using the light sheet such that a volume (200, 400) of the sample (118) is scanned, the volume (200, 400) being spanned by the light propagation direction (A), the extension direction (B) and the scanning direction (C), wherein the light propagation direction (A) is tilted by a tilt angle ($\alpha$) less than 90° with respect to the scanning direction (C);

an optical system (104) configured to generate one layer image for each of the illuminated layers (202); and an image processing unit (140), wherein

the image processing unit (140) is configured to generate raw image data corresponding to an image stack comprising the layer images, the image stack comprising voxel and being sheared by the tilt angle ($\alpha$) or by 90° minus the tilt angle ($\alpha$) and being distorted by the optical properties of the optical system (104) compared to the imaged volume (200, 400) of the sample (118); and

to generate processed image data from the raw image data by defining an image space comprising voxel and corresponding to the imaged volume (200, 400) of the sample (118), and assigning at least one value to each voxel of the image space based on at least one value of at least one voxel of the image stack, wherein the voxel of the image space and the at least one voxel of the image stack are related by a non-linear transformation; or to generate processed image data from the raw image data by applying the inverse of the non-linear transformation to the raw image data;

wherein the non-linear transformation parameterizes the shear of the image stack due to the tilt of the optical system (104) and the image errors induced by the optical system (104), and

wherein the processed image data corresponds to the volumetric image of the sample (118).

15. The light sheet microscope (100, 300) according to claim 14, wherein

the optical illumination system (106) configured to generate the light sheet in an intermediate image space (110); and

the optical system (104) comprises an optical relay system (102) configured to image the light sheet into the sample (118) and to image detection light coming from the sample (118) into the intermediate image space (110); and

an optical detection system (108) configured to generate one layer image for each of the intermediate images of the illuminated layers (202), the optical axis (O2) of the optical detection system (108) being tilted with respect to the optical axis (O2) of the optical relay system (102) by an angle equal to the tilt angle ($\alpha$) or by an angle equal to 90° minus the tilt angle ($\alpha$).

# FIG. 1

FIG. 2

EP 4 560 377 A1

# FIG. 3

FIG. 4

# FIG. 5

# FIG. 6

S600

S602

S604

S606

S608

S610

S612

## FIG. 7

| | |
|---|---|
| | — S700 |
| | — S702 |
| | — S704 |
| | — S706 |
| | — S708 |

## FIG. 8

| | |
|---|---|
| | — S800 |
| | — S802 |
| | — S804 |
| | — S806 |

# FIG. 9

S900

S902

S904

S906

S908

S910

S912

FIG. 10

+ Real image points
* Reconstructed image points

1000

1002

EP 4 560 377 A1

FIG. 11
(state of the art)

+ Real image points
* Reconstructed image points

EP 4 560 377 A1

# EUROPEAN SEARCH REPORT

**Application Number**

EP 23 21 1702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JACOB R LAMB ET AL: "An open-source software package for on-the-fly deskewing and live viewing of volumetric lightsheet microscopy data", ARXIV.ORG, CORNELL UNIVERSITY LIBRARY, 201 OLIN LIBRARY CORNELL UNIVERSITY ITHACA, NY 14853, 31 October 2022 (2022-10-31), XP091357777, * figures 1-3 * * page 2 - page 4 * | 1-15 | INV. G02B21/36 ADD. G06T5/80 G06T3/608 |
| Y | JOHN A. BOGOVIC: "An unbiased template of the Drosophila brain and ventral nerve cord", PLOS ONE, vol. 15, no. 12, 31 December 2020 (2020-12-31), page e0236495, XP093153895, US ISSN: 1932-6203, DOI: 10.1371/journal.pone.0236495 * page 6 * | 1-15 | |
| A | US 2003/103212 A1 (WESTPHAL VOLKER [DE] ET AL) 5 June 2003 (2003-06-05) * paragraph [0060] - paragraph [0115] * | 1-15 | TECHNICAL FIELDS SEARCHED (IPC) G02B G06T |

The present search report has been drawn up for all claims

| Place of search | Date of completion of the search | Examiner |
|---|---|---|
| Munich | 23 April 2024 | Beutter, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 1702

This annex lists the patent family members relating to the patent documents cited in  the above-mentioned European search report.
The members are as contained in the European Patent Office EDP file on
The European Patent Office is in no way liable for these particulars which are merely given for the purpose of information.

23-04-2024

| Patent document cited in search report | Publication date | Patent family member(s) | | Publication date |
|---|---|---|---|---|
| US 2003103212    A1 | 05-06-2003 | AU | 2002324605 A1 | 17-02-2003 |
| | | US | 2003103212 A1 | 05-06-2003 |
| | | WO | 03011764 A2 | 13-02-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. SPARKS et al.** *Biomed Opt. Expr.*, 2020, vol. 11, 7204
- **J. LAMB et al.** *Biomed Opt. Expr.*, 2023, vol. 14, 834
- **G. EVANGELIDIS et al.** *IEEE Trans. Pattern Recog.*, 2008, vol. 31